(19) Europäisches Patentamt European Patent Office Office européen des brevets

(11) **EP 3 100 006 B1**

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(51) Int Cl.:
*G01D 5/353* *(2006.01)*       *G01M 11/00* *(2006.01)*
*H04B 10/071* *(2013.01)*

(21) Anmeldenummer: **15701215.4**

(22) Anmeldetag: **26.01.2015**

(86) Internationale Anmeldenummer:
**PCT/EP2015/051503**

(87) Internationale Veröffentlichungsnummer:
**WO 2015/113936 (06.08.2015 Gazette 2015/31)**

(54) **VORRICHTUNG UND VERFAHREN ZUR REFLEXIONSUNTERDRÜCKUNG BEI DER MESSUNG EINER MESSGRÖSSE MITTELS EINER OPTISCHEN FASER**

DEVICE AND METHOD FOR SUPPRESSION OF REFLECTION DURING THE MEASUREMENT OF A MEASUREMENT VARIABLE BY MEANS OF AN OPTICAL FIBER

DISPOSITIF ET PROCÉDÉ PERMETTANT DE SUPPRIMER LES RÉFLEXIONS LORS DE LA MESURE D'UNE GRANDEUR DE MESURE AU MOYEN D'UNE FIBRE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.01.2014 DE 102014101105**

(43) Veröffentlichungstag der Anmeldung:
**07.12.2016 Patentblatt 2016/49**

(73) Patentinhaber: **BRD, vertr. d. den Bundesminister für Wirtschaft**
**& Energie, dieser vertr. d. den Präsidenten der Bundesanst. f. Materialforsch. & prüfung (BAM)**
**12205 Berlin (DE)**

(72) Erfinder: **LIEHR, Sascha**
**12051 Berlin (DE)**

(74) Vertreter: **Zimmermann & Partner**
**Patentanwälte mbB**
**Josephspitalstr. 15**
**80331 München (DE)**

(56) Entgegenhaltungen:
**DE-A1- 19 525 626    US-A1- 2009 240 455**

• **SCHLEMMER B ET AL: "Real part determination OFDR with digital spatial filtering", IEEE PHOTONICS TECHNOLOGY LETTERS, IEEE SERVICE CENTER, PISCATAWAY, NJ, US, Bd. 6, Nr. 8, August 1994 (1994-08), Seiten 1011-1013, XP011414579, ISSN: 1041-1135, DOI: 10.1109/68.313079**

EP 3 100 006 B1

**Beschreibung**

Die vorliegende Erfindung betrifft eine Vorrichtung sowie ein zugehöriges Verfahren zur Messung einer Messgröße, insbesondere mittels einer Sensorfaser, unter Unterdrückung von Störsignalen.

Viele Bauteile und Bauwerke, die Belastungen ausgesetzt sind, lassen sich durch herkömmliche Sensorik nicht zur Zufriedenheit überwachen. Als vorteilhafte Verfahren für derartige und andere Anwendungen sind Rückstreumessungen, wie die Optische Zeitbereichsreflektometrie (OTDR-Technik) und die inkohärente optische Frequenzbereichsreflektometrie (I-OFDR-Technik) bekannt. Mit Hilfe der OTDR-Technik bzw. der OFDR-Technik können Reflektionsstellen relativ genau gemessen werden.

Bei der inkohärenten optischen Frequenzbereichsreflektometrie (I-OFDR) zur Rückstreumessung in optischen Fasern müssen sehr schwache Signale (z.B. die Rayleigh-Rückstreuung der Faser) und zugleich starke Signale, zum Beispiel von Reflexionen an Steckverbindungen, Komponenten oder Faserbrüchen gemessen werden. Der Dynamikbereich eines (optischen) Frequenzbereichsreflektometers ist allerdings begrenzt, so dass bei der Anwesenheit von starken Reflexen in der Faser schwache Signale nicht oder nicht mehr ausreichend gemessen werden können.

In der Zeitbereichsreflektometrie mit optischen Pulsen ist es üblich, in Kauf zu nehmen, dass starke Reflexe eine Übersättigung des Systems auslösen, nach der für eine gewisse Totzeit keine korrekten Messungen zu erwarten sind. Dies ist jedoch in der optischen Frequenzbereichsreflektometrie nicht möglich, weshalb die oben genannte Problematik der Messbarkeit schwacher Signale ein Nachteil und ein ungelöstes Problem des Frequenzbereichsansatzes darstellt.

US 2009/0240455 A1 zeigt ein Verfahren zur Kalibrierung in der optischen Frequenzbereichsreflektrometrie, bei dem ein gespeichertes Störsignal zur rechnerischen Korrektur für ein Messsignal verwendet wird. Schlemmer et al.: "Real part determination OFDR with digital spatial filtering", IEEE Photonics Technology Letters, Bd. 6, Nr. 8, Aug. 1994, zeigt ein Verfahren zur Unterdrückung von Reflexionen in der optischen Frequenzbereichsreflektrometrie, wobei mittels eines Algorithmus ein Störsignal über eine Faltung mit einer Korrekturfunktion unterdrückt wird. DE 19525626 A1 zeigt ein Verfahren und eine Anordnung zur Auswertung optisch rückgestreuter Signale zur Bestimmung eines streckenabhängigen Messprofils eines Rückstreumediums.

Im Hinblick darauf ist es eine Aufgabe der vorliegenden Erfindung, ein Verfahren und eine Vorrichtung zur Messung einer Messgröße bereitzustellen, die die genannten Nachteile zumindest teilweise überwinden. Diese Aufgabe wird gelöst durch ein Verfahren zur Kompensation von reflexionsbedingten Störsignalen in der optischen Frequenzbereichsreflektometrie gemäß Anspruch 1, sowie durch ein faseroptisches Messsystem gemäß Anspruch 8. Weitere Aspekte, Einzelheiten, Vorteile und Merkmale der vorliegenden Erfindung ergeben sich aus den Unteransprüchen, der Beschreibung sowie den beigefügten Zeichnungen.

Ein erster Aspekt betrifft ein Verfahren zur Kompensation von Störsignalen in der optischen Frequenzbereichsreflektometrie, das umfasst: Bereitstellung eines faseroptischen Messsystems zur inkohärenten optischen Frequenzbereichsreflektometrie, Einstrahlung eines intensitätsmodulierten Sinussignals in das Messsystem, Detektion eines Störsignals innerhalb des Messsystems, Erzeugung eines gegenphasigen Unterdrückungssignals zu dem Störsignal, und Einkopplung des gegenphasigen Unterdrückungssignals in das Messsystem zur Auslöschung des Störsignals. Ein weiterer Aspekt betrifft ein faseroptisches Messsystems zur inkohärenten optischen Frequenzbereichsreflektometrie, das eine Signalquelle, eine Messstrecke mit einer optischen Faser, einen Detektor, und eine Auswerteelektronik umfasst, wobei das Messsystem dazu ausgelegt ist, mindestens ein Störsignal innerhalb der optischen Faser durch Erzeugung und aktive Einkopplung eines gegenphasigen Unterdrückungssignals in das Messsystem zu kompensieren.

Die beiliegenden Figuren veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen einander entsprechend ähnliche Teile.

Figur 1 zeigt ein Messsystem gemäß dem Stand der Technik.
Figur 2 zeigt eine Messung in dem Messsystems der Figur 1.
Figur 3 zeigt eine weitere Messung in dem Messsystem der Figur 1.
Figur 4 zeigt ein Messsystem gemäß Ausführungsbeispielen.
Figur 5 zeigt ein weiteres Messsystem gemäß Ausführungsbeispielen.

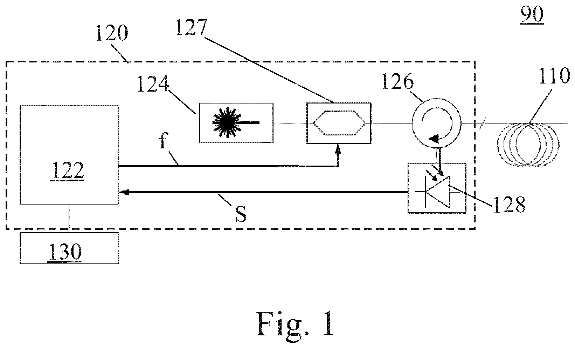

Fig. 1 zeigt den exemplarischen Aufbau eines I-OFDR Messaufbaus 90, auf dem die folgenden Beobachtungen und Erwägungen basieren, die der Erfindung gemäß den Ausführungsbeispielen zugrunde liegen.

Darin ist eine Sensorfaser 110 mit einer Einrichtung 120 zur Durchführung einer inkohärenten optischen Frequenzbereichsreflektometrie-Messung (I-OFDR-Messung) verbunden. Die Einrichtung 120 umfasst ein Gerät zur Messung der komplexen Übertragungsfunktion, beispielsweise einen Netzwerkanalysator, typischerweise einen Vektor-Netzwerkanalysator 122, der mit einer Laserquelle 124, typischerweise einer Dauerstrich-Laserquelle (cw), verbunden ist. Der Netzwerkanalysator 122 erzeugt ein sinusförmiges Ausgangssignal mit der Frequenz f. Mittels dieses Signals wird etwa über einen elektrooptischen Modulator (EOM) eine Amplitudenmodulation des Laserlichts vorgenommen. Dabei kann der Vektor-Netzwerkanalysator 122 die Modulationsfrequenz f in einem vorbestimmten Frequenzintervall mit vorgebbaren Frequenzschritten durchstimmen kann (auch als Sweep bezeichnet). Beispielsweise kann ein Frequenzintervall von 1 MHz bis 500 MHz in 1 MHz-Schritten durchlaufen werden. Das heißt, ein HF-Signal wird zur Amplituden-Modulation der optischen Leistung der Dauerstrich-Laserquelle benutzt, die mit einem elektro-optischen Intensitätsmodulator (EOM) 127 vom Mach-Zehnder-Typ, der im Quadraturpunkt betrieben wird, erreicht wird. Das von der Laserquelle 124 abgegebene und dann modulierte Licht wird dann über einen optischen Zirkulator 126 in die Sensorfaser 110 eingekoppelt. Der Zirkulator 126 koppelt weiterhin das in der Sensorfaser 110 reflektierte bzw gestreute Signal aus und gibt dieses an eine Photodiode bzw. einen Photodetektor 128 weiter. Alles zurückgestreute und rückreflektierte Licht in dieser Faser wird von der Photodiode bzw. dem Photodetektor detektiert. Der Photodetektor 128 wandelt das optische Signal vom Zirkulator 126 in ein elektrisches Signal um und gibt dieses Signal S an den Vektor-Netzwerkanalysator 122 aus. Der Vektor-Netzwerkanalysator 122 bestimmt nun anhand des Signals S die Übertragungsfunktion des Gesamtsystems, das heißt aller optischen und elektrischen Komponenten im Messsystem inklusive der Faser 110. Mit der Einrichtung 120, und typischerweise mit dem Vektor-Netzwerkanalysator 122, ist eine Auswerteeinheit 130 zur Ermittlung einer Dehnung der Sensorfaser 110 verbunden. Die Auswerteeinheit 130 ist eingerichtet, ein Verfahren gemäß den Ausführungsbeispielen der vorliegenden Erfindung auszuführen. Insbesondere kann die Auswerteeinheit 130 ein Computer sein, der programmtechnisch zur Ausführung eines solchen Verfahrens eingerichtet ist. Die Auswerteeinheit 130 kann mit einer Ausgabeeinheit (nicht gezeigt), beispielsweise einem Bildschirm oder einem Drucker, verbunden sein. Die von der Auswerteeinheit 130 ermittelte Dehnung kann dann auf der Ausgabeeinheit angezeigt bzw. ausgegeben werden. Eine inverse schnelle Fourier-Transformation (iFFT) des Eingangssignals am Vektor-Netzwerkanalysator 122 ergibt die Zeitbereichsantwort der Faser.

Eine Messung der Gesamt-Übertragungsfunktion $H(j\omega_m)$ durch den Vektor-Netzwerk-Analysator 122 umfasst nicht nur die gewünschte Übertragungsfunktion $H'(j\omega_m)$ der Faser 110, sondern ist ein Produkt der Frequenzgänge der einzelnen elektrischen und optischen Komponenten im Signalpfad:

$$H'(j\omega_m) = H(j\omega_m) \cdot H_{VNA}(j\omega_m) \cdot H_{EOM}(j\omega_m) \cdot H_{PD}(j\omega_m) \cdot \ldots \qquad (1.1)$$

Die höchsten Abweichungen von der idealen Übertragungsfunktion sind von den elektrischen Komponenten (Vektor-Netzwerk-Analysator, Elektrooptischer Modulator, Photodetektor, HF-Kabel, etc.) zu erwarten. Um diese Störungen der Übertragungsfunktion zu bestimmen, wird eine Kalibrierungsmessung $H_{cal}(j\omega_m)$ mit dem gleichen Aufbau durchgeführt, wobei der Photodetektor 128 die Faser 110 ersetzt.

$$H_{cal}(j\omega_m) = H_{VNA}(j\omega_m) \cdot H_{EOM}(j\omega_m) \cdot H_{PD}(j\omega_m) \cdot \ldots \qquad (1.2)$$

Die kalibrierte Übertragungsfunktion der Faser 110 alleine kann nur dann durch Division der gemessenen Übertragungsfunktion durch die Kalibrierungs-Übertragungsfunktion berechnet werden.

$$H(j\omega_m) = \frac{H'(j\omega_m)}{H_{cal}(j\omega_m)} \qquad (1.3)$$

Die Zeitbereichsantwort h(z) der Faser 110 wird durch die Berechnung der inversen Fouriertransformation (IFFT) erhalten. Dies kann etwa durch Anwendung der symmetrischen IFFT-Funktion der Software Matlab auf die auf null normierte und mit einem Fenster ausgewählte Übertragungsfunktion erreicht werden.

Der dynamische Bereich eines I-OFDR-Systems ist die maximale Intensitätsdifferenz zwischen dem Pegel der höchsten Streu-/Reflexionsspitze in der Faser 110, und dem Rauschpegel der Zeitbereichsantwort. Starke Reflexionen in der Faser begrenzen daher den kleinsten noch messbaren Pegel des Rückstreulichts.

Ein weiteres charakteristisches Merkmal eines I-OFDR Systems 100 ist der kleinste messbare Rückstreupegel. Die Empfindlichkeit des I-OFDR Systems ist eng mit dem Signal-Rausch-Verhältnis (SNR) des Messsystems verbunden. Für Messungen mit generell schwach streuenden Fasern 110 ist die Empfindlichkeit bzw. der kleinste messbare Rückstreupegel eher ein limitierender Faktor als der dynamische Bereich.

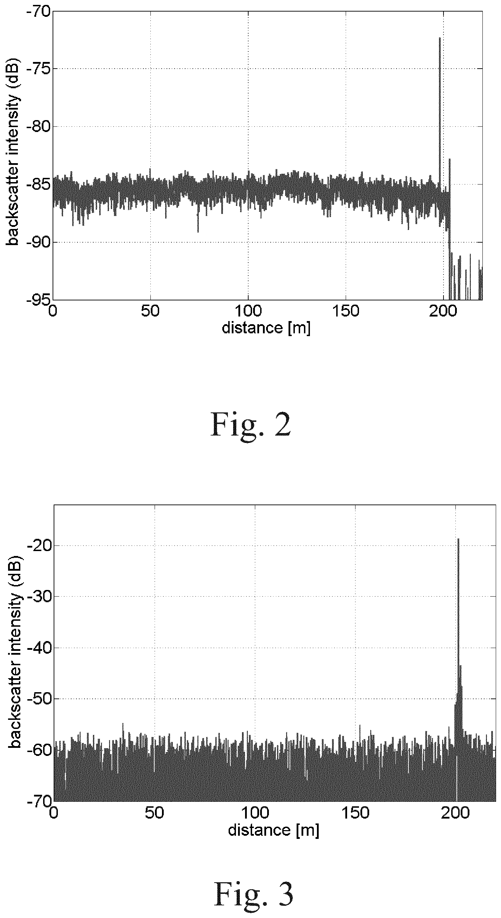

Die Figuren 2 und 3 zeigen Messungen der charakteristischen Eigenschaften eines I-OFDR-Setups. Die Grafik in Figur 2 zeigt eine durch Empfindlichkeit begrenzte Messkurve einer gering-streuenden Single-Mode-Faser. Die Figur 3 zeigt eine durch den Dynamikbereich begrenzte Messung mit der gleichen Faser, jedoch mit nur einer starken Reflexion am Faserende.

Wie aus Figur 3 ersichtlich, wird der Dynamikbereich des I-OFDR System (im exemplarischen Beispiel) grundsätzlich auf etwa 40 dB beschränkt. Kleine Streuereignisse können daher nicht während der gleichzeitigen Präsenz starker Reflexionen aufgelöst bzw. gemessen werden. Zur Lösung dieses grundlegenden Nachteils des FrequenzbereichsAnsatzes im Vergleich zur Arbeit im Zeitbereich wird hier eine aktive Reflexions-Unterdrückung vorgeschlagen. Dieser Ansatz beinhaltet die Erzeugung eines weiteren harmonischen Signals mit genau der gleichen Intensität wie das zu unterdrückende unerwünschte Reflexionssignal für jede verwendete Messfrequenz, wobei das Unterdrückungssignal jedoch jeweils um Pi phasenverschoben ist. Die beiden Signale, also das Störsignal und das Unterdrückungssignal, heben sich somit gegenseitig auf, wenn man sie überlagert.

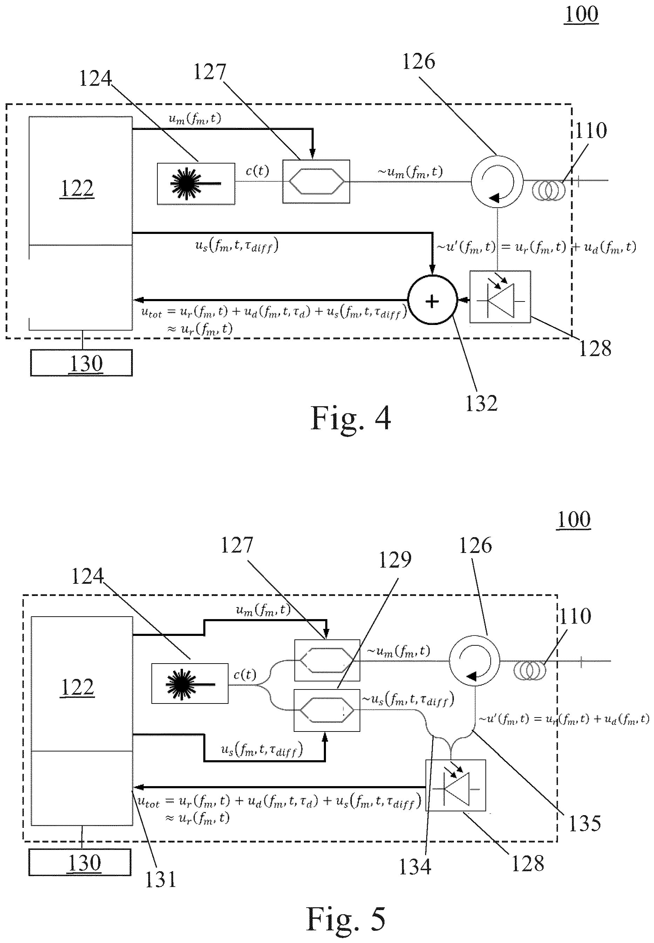

Um diese Technik zu implementieren, wird in Ausführungsbeispielen ein Setup mit zwei unabhängigen Signalgeneratoren erforderlich. Figur 4 zeigt die Implementierung für die elektrische Erzeugung eines Unterdrückungssignals für ein Störsignal. Figur 5 zeigt ein Beispiel für die optische Umsetzung der Unterdrückungstechnik. Beide werden im folgenden erläutert.

Während der Messung einer Übertragungsfunktion des I-OFDR Systems werden die harmonischen Spannungsmodulationssignale

$$u_m(f_m, t) = A \cdot cos(2\pi \cdot f_m \cdot t) \tag{3.1}$$

für alle Modulationsfrequenzen $\omega_m = 2\pi \cdot f_m$ mit einer Amplitude A erzeugt. Das optische Trägersignal c(t) der cw-Laserquelle 124 ist proportional Intensitäts-moduliert und wird in die Faser 110 eingekoppelt. Das intensitätsmodulierte optische Signal kann dann beschrieben werden als

$$x_m(f_m, t) = c(t) \cdot [1 + u_m(f_m, t)] \tag{3.2}$$

Da bandbegrenzte Detektion rund um die Modulationsfrequenz durchgeführt wird, und die Modulationsspannung und die optische Intensität proportional sind, sind die erfassten und gefilterten Basisbandspannungssignale auch direkt proportional zur Eingangsmodulation $u_m(f_m, t)$.

Es wird angenommen, dass eine einzelne starke Reflexion an der Position z in der Faser die Empfindlichkeit der Rückstreu-Messung durch Überschreiten des Dynamikbereichs des Systems begrenzt, so dass schwach verteilte Rayleigh-Streuung der Faser nicht erfasst werden kann, siehe Figur 3. Die an dem Eingangsanschluss $u'(f_m, t)$ empfangenen Signale sind lineare Überlagerungen der schwachen Rückstreu-Signale $u_r(f_m, t)$ und der starken Störsignale $u_d(f_m, t, \tau_d)$ aus der Reflexion:

$$u'(f_m, t) = u_r(f_m, t) + u_d(f_m, t, \tau_d) \tag{3.3}$$

Die Laufzeit $\tau_d$ ist die Verzögerung, die das Signal $u_m(f_m, t)$ erfährt wenn es sich entlang der elektrischen und optischen Signalpfade auf dem Hin- und Rückweg zur Position z in der Faser ausbreitet, vor seiner Detektierung als $u_d(f_m, t, \tau_d)$. $\tau_d$ kann durch die Reflexionszeitverzögerung in einer nicht-kalibrierten Messung der Faser bestimmt werden.

$$h'(t) = \mathcal{F}^{-1}\{H'(j\omega_m)\} \tag{3.4}$$

Auch die Reflexionsintensität $a_d$ des Störsignals wird nur von dem Maximum der Reflexion in der Zeitbereichsdarstellung h' (t) abgeleitet. Sie wird später verwendet, um die erforderliche Amplitude des erzeugten Unterdrückungssignal zu berechnen.

Das Störsignal, das von der Reflexion für alle gemessenen Modulationsfrequenzen am Eingang des VNA erkannt wird, ist

$$u_d(f_m, t, \tau_d) \sim a_d \cdot cos(2\pi \cdot f_m \cdot (t + \tau_d)) \tag{3.5}$$

Idealerweise ist $a_d$ ein reeller Faktor und wird im folgenden als solcher behandelt, aber in der technischen Realität ist es ein komplexer Vektor mit Abweichungen in Phase und Amplitude für unterschiedliche $f_m$ gemäß der Übertragungsfunktion der Messstrecke. Die Frequenzgänge der beiden Signalpfade müssen gegeneinander kalibriert werden, um eine optimale Unterdrückung von $u_d(f_m, t, \tau_d)$ zu erhalten. Der Kalibrierungs-Term wird weiter unten eingeführt, bei der Definition des Unterdrückungssignals. Um das Störsignal $u_d(f_m, t, \tau_d)$ vollständig zu unterdrücken, muss ein Unterdrückungssignal mit gleicher Frequenz und gleicher Intensität, aber einer Phasendifferenz von genau $\pi$ auf der Signalerfassungsseite für jede Modulationsfrequenz f$_m$ erzeugt und mit dem Messsignal $u'(f_m, t)$ überlagert werden. Diese Zeitdifferenz $\Delta t$ des erfassten Unterdrückungssignals $u_s(f_m, t)$ in Bezug auf das erfasste Störsignal $u_d(f_m, t, \tau_d)$ ist auch eine Funktion der Modulationsfrequenz f$_m$ :

$$\Delta t = \frac{1}{2 \cdot f_m} \tag{3.6}$$

Um Längendifferenzen der Pfade in den beiden Signalarmen zu kompensieren, wird auch die Laufzeit $\tau_s$ im Unterdrückungssignalpfad bestimmt. Dies kann mittels einer Kalibrierungsmessung des Unterdrückungs-Pfads alleine durchgeführt werden, wobei mit einem zweiten Signalgenerator das Kalibrierungssignal erzeugt wird:

$$u_{s\_cal}(f_m, t) = p_{s\_cal} \cdot \cos(2\pi \cdot f_m \cdot t) \tag{3.7}$$

mit der Modulationsintensität im Unterdrückungspfad $\boldsymbol{p_{s\_cal}}$.

Die Pfadverzögerung im Unterdrückungssignal-Pfad $\tau_s$ $a_s$ Pfadverzögerung und die Amplitude $a_s$ des übertragenen Kalibrierungssignals können aus den Zeitbereichsdaten $h_s(t)$ der Übertragungsfunktion der Unterdrückungssignal-Kalibrierung $H_s(j\omega_m)$ erhalten werden:

$$h_s(t) = \mathcal{F}^{-1}\{H_s(j\omega_m)\} \tag{3.8}$$

Die erforderliche Zeitdifferenz $\tau_{diff}(f_m)$ der erzeugten Unterdrückungssignale $u_s(f_m, t)$ relativ zu den erzeugten Messpfadsignalen $u_m(f_m, t)$ können dann berechnet werden unter Verwendung von

$$\tau_{diff}(f_m) = \tau_d - \tau_s + \frac{1}{2 \cdot f_m} \tag{3.9}$$

Man könnte das Unterdrückungssignal $u_s(f_m, t, \tau_{diff})$ einfach als eine Funktion der absoluten Phasen und Phasendifferenzen, erhalten aus der Übertragungsfunktion $H_s(j\omega_m)$ und $u_d(f_m, t, \tau_d)$ der Unterdrückungssignal-Kalibrierungsmessung beschreiben, aber die Kenntnis der absoluten Signalverzögerungen $\tau_d$ und $\tau_s$ ermöglicht die Kompensation von möglichen Laufzeitänderungen (z. B. aufgrund von Temperaturänderungen oder Spannungsbelastung in der Faser 110). Das Nachverfolgen von Änderungen des erfassten Signals während der Messung ermöglicht die Bestimmung von Laufzeit-Drifts und Echtzeit-Kompensation durch die Anpassung von $\tau_{diff}(f_m)$.

Um das Störsignal perfekt zu unterdrücken, müssen nicht nur die Laufzeitunterschiede der beiden Pfade bestimmt werden. Auch die Übertragungsfunktionen der beiden Signalpfade und deren Abweichungen in der Phase und Amplitude müssen für jede Modulationsfrequenz ($f_m$) kalibriert werden.

Die Übertragungsfunktion für den Unterdrückungspfad $H_s(j\omega_m)$ und die Laufzeit $\tau_s$ wurden bestimmt. Auch die Übertragungsfunktion des Messpfads wird einbezogen, um das ideale vor-verzerrte Unterdrückungssignal zu definieren. Die Kalibrierungs-Übertragungsfunktion $H_{cal}(j\omega_m)$ des Messpfads kann beispielsweise durch die Durchführung einer Übertragungsfunktions-Messung eines abgeschwächten optischen Signals mit dem Photodetektor an der Position der Faser 110 bestimmt werden. Analog kann die Kalibrierungs- Zeitverzögerung $\tau_{cal}$ und die erfasste Intensität der Kalibrierung $a_{cal}$ aus der Position und Maximalamplitude der Messung im Zeitbereich ermittelt werden:

$$h_{cal}(t) = \mathcal{F}^{-1}\{H_{cal}(j\omega_m)\} \tag{3.10}$$

Die Unterdrückungssignale, die erzeugt werden müssen, um mit dem Signal der Faser am Signaleingang $u'(f_m, t)$ bei allen Modulationsfrequenzen addiert bzw. eingekoppelt zu werden, müssen in Bezug auf ihre Phase und Amplitude vorverzerrt werden, um die verschiedenen Übertragungsfunktionen der beiden Signalpfade vor der Detektion zu kompensieren. Die vorverzerrte Übertragungsfunktion, oder auch komplexer Korrekturterm $a(f_m)$, ist

$$a(f_m) = \frac{a_d}{a_{cal}} \cdot \frac{H_{cal}(j\omega_m)}{H_s(j\omega_m)} \cdot e^{i\omega_m(\tau_s - \tau_{cal})} \tag{3.11}$$

$a(f_m)$ umfasst die Übertragungsfunktionen des Messsignalpfades $H_{cal}(j\omega_m)$ und des Unterdrückungssignalpfads $H_s(j\omega_m)$. Die jeweiligen erfassten Intensitätsunterschiede der Kalibrierungsmessung $a_{cal}$ und der Messung des Störsignals $a_d$ werden berücksichtigt, um bei einer Unterdrückungssignalamplitude äquivalent zu $u_d(f_m,t,\tau_d)$ zu gelangen. Auch der Zeitverzögerungs-Offset aufgrund der unterschiedlichen Laufzeiten der Unterdrückungssignal- und der Kalibrierungssignalwege ($\tau_s$ - $\tau_{cal}$) wird berücksichtigt. $a(f_m)$ berücksichtigt nur die Kombination der Amplituden und Phasenverzögerungen der beiden Übertragungsfunktionen ohne Zeitversatz der Impulsantwort.

Das Unterdrückungssignal $u_s$, das erzeugt werden muss um gleiche Intensitäten und Phasen von $u_s(f_m,t,\tau_{diff})$ und $u_d(f_m,t,\tau_d)$ für jede Modulationsfrequenz am Eingang zu haben, umfasst die Verzögerungsdifferenz $\tau_{diff}$ und den komplexen Korrekturterm $a(f_m)$ und wird beschrieben als

$$u_s(f_m, t, \tau_{diff}) = |a(f_m)| \cdot p_{s\_cal} \cdot cos[2\pi \cdot f_m \cdot (t + \tau_{diff}) + angle(a(f_m))] \tag{3.12}$$

$angle(a(f_m))$ ist dabei der Winkel (in Radiant) des komplexen Korrekturterms.

Das resultierende Signal am Eingang des Vektor-Netzwerkanalysators ist somit

$$u_{tot}(f_m, t, \tau_s) = u_r(f_m, t) + u_d(f_m, t, \tau_d) + u_s(f_m, t, \tau_{diff}) \tag{3.13}$$

und kann reduziert werden, auf

$$u_{tot}(f_m, t, \tau_s) \approx u_r(f_m, t) \tag{3.14}$$

$$\text{da } u_d(f_m, t, \tau_d) + u_s(f_m, t, \tau_{diff}) \approx 0$$

Der Algorithmus wurde oben so detailliert und verständlich wie möglich erklärt, dessen Komplexität kann jedoch durch die Verwendung der Übertragungsfunktionen der Signalwege effizient reduziert werden. Die Zeitverzögerung des Unterdrückungssignals muss dann nicht explizit berechnet werden, und der komplexe Korrekturterm reduziert sich zu:

$$a(f_m) = \frac{a_d}{a_{cal}} \cdot \frac{H_{cal}(j\omega_m)}{H_s(j\omega_m)} \tag{3.15}$$

Das Unterdrückungssignal kann beschrieben werden als

$$u_s(f_m, t, \tau_{diff}) = \tag{3.16}$$
$$|a(f_m)| \cdot p_{s\_cal} \cdot cos\left[2\pi \cdot f_m \cdot \left(t + \tau_d - \tau_{cal} + \frac{1}{2 \cdot f_m}\right) + angle(a(f_m))\right]$$

Die Unterdrückungssignale werden in Ausführungsbeispielen entweder im elektrischen Bereich, nach Detektion durch den Photodetektor 128 (vergleiche Figur 4) oder im optischen Bereich, vergleiche Figur 5, überlagert bzw. eingekoppelt. Dies kann durch Einkoppeln eines Teils des cw-Trägersignals $c(t)$ in einen zweiten elektrooptischen Modulator 129, siehe Fig. 5, und Modulieren des Unterdrückungssignals $u_s(f_m,t,\tau_{diff})$ auf den optischen Träger, bevor er den Rückstreusignalpfad und den Unterdrückungssignal-Pfad erreicht, und vor Detektion von $u_{tot}(f_m,t,\tau_s)$ durch den Photodetektor 128. Obwohl die beiden Signale am Photodetektor gemischt werden, kann Interferenz des Rückstreusignals mit dem Unterdrückungssignal durch die Wahl eines optischen Pfades mit einer Ungleichheit zwischen dem optischen Rückstreu-Pfad $\tau_{d(opt)}$ und dem optischen Unterdrückungspfad $\tau_{d(opt)}$, so dass die Kohärenzzeit $t_c$ schon überschritten wird, noch bevor die Signale am optischen Koppler kombiniert werden:

$$\left(\tau_{d(opt)} - \tau_{s(opt)}\right) \gg t_c \tag{3.17}$$

Verfahren zur aktiven Unterdrückung von Reflexionen wurden in Bezug auf nur eine einzige störende Reflexion beschrieben. Es kann aber in Ausführungsbeispielen verwendet werden, um gleichzeitig mehrere Reflexionen zu unterdrücken. Für $n$ Reflexionen in der FUT mit $r \in \{1, ...,n\}$ an den Positionen $z_r$ ist dann das Unterdrückungssignal eine Überlagerung von n harmonischen Unterdrückungssignalen mit verschiedenen Phasen ($\tau_{diff\_r} \sim \tau_{d\_r} \sim z_r$) und Intensitäten $|\alpha_r(f_m)| \cdot p_{s\_cal}$, in Abhängigkeit vom Abstand und dem Reflexionsvermögen:

$$u_s\left(f_m, t, \tau_{diff\_r}\right) = \sum_{r=1}^{n} |a_r(f_m)| \cdot p_{s\_cal} \cdot cos\left[2\pi \cdot f_m \cdot \left(t + \tau_{diff\_r}\right) + angle(a_r(f_m))\right] \tag{3.18}$$

Durch Umsetzung der aktiven Unterdrückungstechnik gemäß Ausführungsbeispielen kann der Dynamikbereich der I-OFDR wesentlich erhöht werden. Simulationsergebnisse mit unterschiedlichen Übertragungsfunktionen der Signalwege (einschließlich Phasen- und Amplitudenrauschen) haben die Gültigkeit der beschriebenen Reflexionsunterdrückungstechnik bestätigt.

Figur 4 zeigt die Implementierung für die elektrische Erzeugung eines Unterdrückungssignals für ein Störsignal in Ausführungsbeispielen eines Messsystems 100. Dabei wird das Unterdrückungssignal $u_s$ von dem Vektor-Netzwerkanalysator 122 gemäß dem oben beschriebenen Algorithmus erzeugt (vgl. 3.16) und in einem Addierer 132 auf das Ausgangssignal des Photodetektors 128 addiert, bevor dieses in den Vektor-Netzweranalysator 122 geleitet wird.

Figur 5 zeigt ein Ausführungsbeispiel eines Messsystems 100 für die optische Umsetzung der Unterdrückungstechnik. Dabei wird das vom Vektor-Netzwerkanalysator 122 erzeugte Unterdrückungssignal $u_s$ zur Ansteuerung eines zweiten elektrooptischen Modulators 129 benutzt. Dieser moduliert einen Teil des Lichts c(t) des Lasers 124, der zuvor aus dem Lasersignal ausgekoppelt wurde. Das Störsignal $u_s$ wird dann vor dem bzw. am Photodetektor 128 wieder mit dem Messsignal u' ($f_m$, t) zusammengeführt. Dazu wird das Signal der Faser 134 aus dem elektrooptischen Modulator 129 mit der aus dem optischen Zirkulator 126 kommenden Signal der Faser 135 gemeinsam auf den Photodetektor 128 geführt.

In Ausführungsbeispielen eines Verfahrens zur Kompensation von Reflexionen in der optischen Frequenzbereichsreflektometrie werden gemäß dem oben beschriebenen Ausführungen die folgenden Schritte ausgeführt: Ein faseroptischen Messsystem 100 zur inkohärenten optischen Frequenzbereichsreflektometrie wird bereitgestellt. Während der Messung wird ein intensitätsmoduliertes Sinussignal in eine Faser 110 des Messsystems 100 eingestrahlt. Mindestens ein durch Reflexion entstandenes Störsignal innerhalb des Messsystems 100 wird detektiert, und durch Überlagerung eines gegenphasigen Unterdrückungssignals $u_s$ das Störsignal unterdrückt bzw. ausgelöscht. Das komplexe Unterdrückungssignal ist typischerweise betragsgleich zum Störsignal, bzw. bei mehreren Störsignalen der vektoriellen Summe der Störsignale.

Dabei hat das überlagerte Unterdrückungssignal typischerweise eine definierte Phasen- und Betragsrelation zum Störsignal. Das gegenphasige Unterdrückungssignal kann dabei in Ausführungsbeispielen entweder elektrisch oder optisch in das Messsystem eingekoppelt werden. In Ausführungsbeispielen kann der optische Zirkulator 126 auch ein anderes Element sein, etwa ein bidirektionaler Koppler. Zudem kann in Ausführungsbeispielen die Modulation des Lichts der Laserquelle 124 auch durch andere Verfahren als den beschriebenen elektrooptischen Modulator 127 durchgeführt werden. So kann etwa bereits der Laser 124 selbst direkt von dem Vektor-Netzweranalysator 122 moduliert werden.

Dabei wird mindestens eines der folgenden gemessen: die Laufzeit des Störsignals, die Übertragungsfunktion des Pfades des Unterdrückungssignals, und die Übertragungsfunktion des Pfades des Messsignals. Für jede verwendete Messfrequenz $f_m$ werden dabei typischerweise Betrag und Phase eines zugeordneten Unterdrückungssignals aus den Laufzeiten für ein Störsignal und ein Unterdrückungssignal berechnet.

Das Unterdrückungssignal wird typischerweise in Intervallen oder kontinuierlich durch Auswertung der Messergebnisse nachgeführt, um die Effizienz der Unterdrückung zu gewährleisten und/oder zu optimieren.

Ein faseroptisches Messsystem 100 gemäß Ausführungsbeispielen zur inkohärenten optischen Frequenzbereichsreflektometrie umfasst generell eine Signalquelle, eine Messstrecke mit einer optischen Faser 110, einen Detektor 128 und eine Auswerteelektronik. Dabei ist das Messsystem dazu ausgelegt, reflexionsbedingte Störsignale innerhalb der Faser durch Erzeugung eines Unterdrückungssignals zu kompensieren. Ein durch Reflexion oder Brechung entstandenes Störsignal innerhalb der Messanordnung wird dabei detektiert, und durch Überlagerung eines gegenphasigen Unterdrückungssignals zur Auslöschung gebracht.

Dabei kann das Unterdrückungssignal generell elektronisch erzeugt und mit dem Messsignal zusammengeführt werden. Dies kann entweder im elektrischen Bereich durch Addition geschehen, wie mit Bezug auf Figur 4 beschrieben, oder optisch durch Überlagerung des Unterdrückungssignals mit dem Messsignal, wie in Bezug auf Figur 5 beschrieben. In Ausführungsbeispielen kann das Unterdrückungssignal dabei elektronisch erzeugt und als Überlagerung auf das Laser-Eingangssignal addiert werden. In weiteren Ausführungsbeispielen kann ein Teil des Laserlichts noch vor dem elektrooptischen Modulator (EOM) ausgekoppelt werden, in einem zweiten elektrooptischen Modulator mit dem Unterdrückungssignal moduliert und dann wieder in das Messsystem eingekoppelt werden. Dies kann etwa, wie in Fig. 5 dargestellt, nach dem Zirkulator 126 am Eingang des Photodetektors 128 ausgeführt werden.

Die vorliegende Erfindung wurde anhand von Ausführungsbeispielen erläutert. Diese Ausführungsbeispiele sollten keinesfalls als einschränkend für die vorliegende Erfindung verstanden werden. Die nachfolgenden Ansprüche stellen einen ersten, nicht bindenden Versuch dar, die Erfindung allgemein zu definieren.

**Patentansprüche**

1. Verfahren zur aktiven Kompensation von reflexionsbedingten Störsignalen in der optischen Frequenzbereichsreflektrometrie, umfassend:

   - Bereitstellung eines faseroptischen Messsystems (100) zur inkohärenten optischen Frequenzbereichsreflektometrie,
   - Einstrahlung eines intensitätsmodulierten Sinussignals in das Messsystem,
   - Detektion eines Störsignals innerhalb des Messsystems,
   - Erzeugung eines gegenphasigen Unterdrückungssignals zu dem Störsignal, und
   - Einkopplung des gegenphasigen Unterdrückungssignals in das Messsystem (100) zur Auslöschung des Störsignals.

2. Verfahren nach Anspruch 1, wobei das eingekoppelte Unterdrückungssignal eine definierte Phasen- und Betragsrelation zum Störsignal hat.

3. Verfahren nach Anspruch 1 oder 2, wobei das gegenphasige Unterdrückungssignal entweder elektrisch oder optisch in das Messsystem (100) eingekoppelt wird.

4. Verfahren nach einem der vorhergehenden Ansprüche, wobei mindestens eines der folgenden gemessen wird:

   - die Laufzeit des Störsignals,
   - die Übertragungsfunktion des Pfades des Unterdrückungssignals
   - die Übertragungsfunktion des Pfades des Messsignals

5. Verfahren nach einem der vorhergehenden Ansprüche, wobei für jede verwendete Messfrequenz Betrag und Phase eines zugeordneten Unterdrückungssignals berechnet wird.

6. Verfahren nach einem der vorhergehenden Ansprüche, wobei das Unterdrückungssignal eine Überlagerung von n harmonischen Unterdrückungssignalen mit verschiedenen Phasen ($\tau_{diff\_r} \sim \tau_{d\_r} \sim z_r$) und Intensitäten $|a_r(f_m)| \cdot p_{s\_cal}$ ist, um mehrere Störsignale gleichzeitig zu unterdrücken.

7. Verfahren nach einem der vorhergehenden Ansprüche, wobei das Unterdrückungssignal in Intervallen oder kontinuierlich durch Auswertung der Messergebnisse nachgeführt wird, um die Effizienz der Unterdrückung zu gewährleisten und/oder zu optimieren.

8. Faseroptisches Messsystems (100) zur inkohärenten optischen Frequenzbereichsreflektometrie, umfassend:

   eine Signalquelle (110),
   eine Messstrecke mit einer optischen Faser (110),
   einen Detektor (128),
   eine Auswerteelektronik,

   wobei das Messsystem dazu ausgelegt ist, mindestens ein reflexionsbedingtes Störsignal innerhalb der optischen Faser (110) durch Erzeugung und aktive Einkopplung eines gegenphasigen Unterdrückungssignals in das Messsystem (100) zu kompensieren.

9. Messsystem nach Anspruch 8, wobei das Messsystem (100) weiter umfasst:

- eine Elektronik, die dazu ausgelegt ist, ein Störsignal zu detektieren und ein dazu gegenphasiges Unterdrückungssignal zu erzeugen, wobei das Unterdrückungssignal elektronisch erzeugt und mit dem Messsignal zusammengeführt wird, wobei das Unterdrückungssignal entweder optisch mit dem Messsignal gemischt oder elektrisch zum Messsignal addiert wird.

**Claims**

1. A process for active compensation of reflection-caused interference signals in optical frequency domain reflectometry, the method comprising:

- providing a fiber optic measurement system (100) for incoherent optical frequency domain reflectometry;
- irradiating an intensity-modulated sine-wave signal into the measurement system;
- detecting an interference signal within the measurement system;
- producing an opposite-phase suppression signal which is in phase opposition to the interference signal; and
- coupling the opposite-phase suppression signal into the measurement system (100) to extinguish the interference signal.

2. A process according to claim 1, wherein the coupled suppression signal has a defined phase and magnitude relationship to the interference signal.

3. A process according to claim 1 or 2, wherein the opposite-phase suppression signal is either electrically or optically coupled into the measurement system (100).

4. A process according to any one of the preceding claims, wherein at least one of the following is measured:

- the propagation time of the interference signal;
- the transfer function of the path of the suppression signal; and
- the transfer function of the path of the measurement signal.

5. A process according to any one of the preceding claims, wherein, for each measurement frequency used, the magnitude and phase of an associated suppression signal is calculated.

6. A process according to any one of the preceding claims, wherein the suppression signal is a superposition of n harmonic suppression signals with different phases ($\tau_{diff\_r} \sim \tau_{d\_r} \sim z_r$) and intensities $|a_r (f_{rn})| \cdot p_{s\_cal}$, to suppress multiple interfering signals simultaneously.

7. A process according to any one of the preceding claims, wherein the suppression signal is corrected at intervals or continuously by evaluating measurement results, to ensure and/or optimize the efficiency of the suppression.

8. A fiber optic measurement system (100) for incoherent optical frequency domain reflectometry, comprising:

a signal source (110);
a measured path with an optical fiber (110);
a detector (128); and
an evaluation electronics;

the measurement system being configured to compensate for at least one reflection-caused interference signal within the optical fiber (110) by producing and actively coupling of an opposite-phase suppression signal into the measurement system (100).

9. A measurement system according to claim 8, wherein the measurement system (100) further comprises:

- electronics that are configured to detect an interference signal and to produce a suppression signal in phase opposition to it, the suppression signal being electronically produced and brought together with the measurement signal, the suppression signal being either optically mixed with the measurement signal or electrically added to the measurement signal.

**Revendications**

1. Procédé de compensation active de signaux parasites dus à la réflexion dans réflectométrie à domaine de fréquence, comprenant :

   - la fourniture d'un système de mesure à fibre optique (100) pour la réflectométrie à domaine de fréquence optique incohérente,
   - introduction d'un signal sinusoïdal modulé en intensité dans le système de mesure,
   - détection d'un signal parasite à l'intérieur du système de mesure,
   - génération d'un signal d'inhibition de phase inverse par rapport au signal parasite et
   - introduction du signal d'inhibition de phase inverse dans le système de mesure (100) pour l'effacement du signal parasite.

2. Procédé selon la revendication 1, le signal d'inhibition introduit ayant une relation de phase et de valeur définie par rapport au signal parasite.

3. Procédé selon la revendication 1 ou 2, le signal d'inhibition de phase inverse étant introduit dans le système de mesure (100) soit électriquement soit optiquement.

4. Procédé selon l'une des revendications précédentes, au moins un des éléments suivants étant mesuré :

   - durée du signal parasite,
   - fonction de transmission du trajet du signal d'inhibition
   - fonction de transmission du trajet du signal de mesure.

5. Procédé selon l'une des revendications précédentes, moyennant quoi, pour chaque domaine de fréquence utilisé, la valeur et la phase d'un signal d'inhibition correspondant sont calculées.

6. Procédé selon l'une des revendications précédentes, le signal d'inhibition étant une superposition de n signaux d'inhibition harmoniques avec différentes phases ($\tau_{diff\_r} \sim \tau_{d\_r} \sim z_r$) et intensités $|a_r(f_m)| \cdot p_{s\_cal}$ afin d'inhiber simultanément plusieurs signaux parasites.

7. Procédé selon l'une des revendications précédentes, le signal d'inhibition étant suivi par intervalles ou en continu par l'analyse des résultats de mesure afin de garantir et/ou d'optimiser l'efficacité de l'inhibition.

8. Système de mesure à fibres optiques (100) pour une réflectométrie à domaine de fréquence optique incohérente, comprenant :

   une source de signaux (110),
   un trajet de mesure avec une fibre optique (110),
   un détecteur (128),
   une électronique d'analyse,
   le système de mesure étant conçu pour compenser au moins un signal parasite dû à la réflexion à l'intérieur de la fibre optique (110) par la production et l'introduction active d'un signal d'inhibition de phase inverse dans le système de mesure (100).

9. Système de mesure selon la revendication 8, le système de mesure (100) comprenant en outre :

   - une électronique qui est conçue pour détecter un signal parasite et un signal d'inhibition de phase inverse, le signal d'inhibition étant généré électroniquement et fusionné avec le signal de mesure, le signal d'inhibition étant soit mélangé optiquement avec le signal de mesure soit additionné électriquement au signal de mesure.

Fig. 1

Fig. 2

Fig. 3

100

124    127                126

$u_m(f_m, t)$

110

122    $c(t)$    $\sim u_m(f_m, t)$

$u_s(f_m, t, \tau_{diff})$

$\sim u'(f_m, t) = u_r(f_m, t) + u_d(f_m, t)$

$u_{tot} = u_r(f_m, t) + u_d(f_m, t, \tau_d) + u_s(f_m, t, \tau_{diff})$
$\approx u_r(f_m, t)$

128

130

132

Fig. 4

100

127    129    126

124

$u_m(f_m, t)$

110

122    $c(t)$    $\sim u_m(f_m, t)$

$\sim u_s(f_m, t, \tau_{diff})$

$\sim u'(f_m, t) = u_r(f_m, t) + u_d(f_m, t)$

$u_s(f_m, t, \tau_{diff})$

$u_{tot} = u_r(f_m, t) + u_d(f_m, t, \tau_d) + u_s(f_m, t, \tau_{diff})$
$\approx u_r(f_m, t)$

135

130    131    134    128

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090240455 A1
- DE 19525626 A1

**In der Beschreibung aufgeführte Nicht-Patentliteratur**

- **SCHLEMMER et al.** Real part determination OFDR with digital spatial filtering. *IEEE Photonics Technology Letters,* August 1994, vol. 6 (8